# EUROPÄISCHE PATENTANMELDUNG

(11) **EP 1 367 276 A1**
(43) Veröffentlichungstag der Anmeldung: **03.12.2003**
(21) Anmeldenummer: 02077081.4
(22) Anmeldetag: 27.05.2002
(51) Int. Cl.: F16C 29/00, F16B 13/14

(54) **Befestigung einer Schiene einer Linearbewegungsführung**

(71) Anmelder: Schneeberger Holding AG, 4914 Roggwil (CH)
(72) Erfinder: Schröppel, Winfried, 72800 Eningen u. A (DE); Dann, Thomas, 76307 Karlsbad 2 (DE)
(74) Vertreter: EGLI-EUROPEAN PATENT ATTORNEYS

(57) **Zusammenfassung**

Um mit einer Linearbewegungsführungs-Verbindung zwischen einem Führungskörper (1) der Linearbewegungsführung und einem Träger (17), an dem der Führungskörper befestigt ist, die ein Verbindungselement (23) aufweist, das sich sowohl in einer Ausnehmung (10) des Führungskörpers (1) als auch in einer Ausnehmung (19) des Trägers (17) befindet und mit Abstand zu einer Wand (10a) von einer der beiden Ausnehmungen (10, 19) angeordnet ist, eine Verbindung zu schaffen, die eine hohe mechanische Belastbarkeit der Führung zulässt, wird vorgeschlagen, dass sich zwischen dem Verbindungselement (23) und mindestens jener Ausnehmung (10, 19), zu deren Wand (10a) das Verbindungselement mit Abstand angeordnet ist, eine ausgehärtete Füllmasse (29) befindet, die sowohl Kontakt zum Verbindungselement (23) als auch zur Wand (10a) hat.

## Beschreibung

Die Erfindung betrifft eine Linearbewegungsführungs-Verbindung zwischen einem Führungskörper, der Linearbewegungsführung und einem Träger, an dem der Führungskörper befestigt ist, die ein Verbindungselement aufweist, das sich sowohl in einer Ausnehmung des Führungskörpers als auch in einer Ausnehmung des Trägers befindet und mit Abstand zu einer Wand von einer der beiden Ausnehmungen angeordnet ist. Die Erfindung betrifft ausserdem ein Verfahren zur Erzeugung einer solchen Verbindung sowie eine Linearbewegungsführung, die mit einer solchen Verbindung versehen ist.

Um in Maschinen oder Anlagen lineare Bewegungen ausführen zu können, sind Linearbewegungsführungen bekannt, bei denen zwischen zwei Führungskörpern Wälzkörper angeordnet sind. Durch die Wälzkörper können zum einen Kräfte übertragen und zum anderen reibungsarme relative Bewegungen zwischen den beiden Führungskörper ermöglicht werden. Es sind hierbei unterschiedliche Typen von derartigen Linearbewegungsführungen bekannt geworden. Sämtlichen der von der vorliegenden Erfindung betroffenen Linearbewegungsführungen ist jedoch gemeinsam, dass einer der Führungskörper in Form einer Schiene ausgebildet ist, der mit Führungsflächen versehen ist. Die Wälzkörper bewegen sich auf diesen Führungsflächen.

Um derartige Linearbewegungsführungen in einer Maschine oder einem Handhabungsapparat einzubauen, ist die Befestigung der Schiene an einem Träger erforderlich. Üblicherweise werden die Schienen mit Schraubverbindungen befestigt. Hierzu sind in der Schiene Durchgangsbohrungen und im Träger mit Innengewinden versehene Sacklochbohrungen vorgesehen. Die jeweilige Schraube ist dann in die Sacklochbohrung eingeschraubt und liegt mit dem Schraubenkopf auf einem Absatz der Durchgangsbohrung auf. Der zylindrische Teil der Schraube ist hingegen mit Abstand zur Wand der Durchgangsbohrung angeordnet. Mit einer solchen, beispielsweise in der WO 00/39472 gezeigten Verbindung, werden die Schiene und der Träger gegeneinander gepresst.

An dieser Verbindung kann als nachteilig empfunden werden, dass sie in Bezug auf Kräfte, deren Richtungen parallel zur Trennfläche zwischen Schiene und Träger verlaufen, nur vergleichsweise gering belastbar ist. Die Belastbarkeit bestimmt sich im wesentlichen einerseits aus der Flächenpressung und der daraus resultierenden Haftreibung und andererseits aus der Scherbelastbarkeit der Schrauben. Es ist deshalb oftmals erforderlich, zusätzlich die Schiene und den Träger miteinander zu verstiften, womit jedoch ein nicht unerheblicher weiterer Aufwand verbunden ist. Zudem bringt eine solche Verstiftung auch die Gefahr eines Verzugs der Schiene mit sich.

Es können aber auch bereits Situationen problematisch werden, bei denen die maximale Belastbarkeit der Verbindung noch nicht erreicht ist. Bereits zuvor können nämlich aufgrund der Eigenschaften der Verbindung Verformungen oder Verschiebungen, beispielsweise der Schiene, auftreten, die die Führungsgenauigkeit beeinträchtigen.

Der Erfindung liegt deshalb die Aufgabe zugrunde, eine Verbindung für Komponenten einer gattungsgemässen Linearbewegungsführung mit einem Träger zu schaffen, die eine gute Belastbarkeit der Führung zulässt.

Die Aufgabe wird bei einer Linearbewegungsführung der eingangs genannten Art erfindungsgemäss dadurch gelöst, dass sich zwischen dem Verbindungselement und zumindest jener Ausnehmung, zu deren Wand das Verbindungselement mit Abstand angeordnet ist, eine ausgehärtete Füllmasse befindet, die sowohl Kontakt zum Verbindungselement als auch zur Wand hat.

Erfindungsgemäss wird zwischen dem Verbindungselement, das vorzugsweise eine Schraube ist, und der Wand durch die Füllmasse eine formschlüssige Verbindung geschaffen. Da diese formschlüssige Verbindung in zweckmässiger Weise zusätzlich zu jener Klemmverbindung, die durch die Verspannung der Schiene mit dem Träger mittels dem Verbindungselement, erzeugt wird, kann der Formschluss die Belastbarkeit der Verbindung erhöhen. Bisherige Verbindungen konnten nur aufgrund einer Haftreibung zwischen der Schiene und dem Träger sowie einem Widerstandsmoment der Schraube gegen Scherung Belastungen quer zur Schraubenlängsachse aufnehmen. Bei einer erfindungsgemässen Verbindung wird vorzugsweise zusätzlich eine Druckbelastbarkeit der Füllmasse genutzt, durch die sich die Gesamtbelastbarkeit der Verbindung steigern lässt.

Mit einer erfindungsgemässen Lösung ist es deshalb möglich, auch ohne Verstiftung der Schiene mit dem Träger eine hohe Belastbarkeit der Verbindung Schiene/Träger zu erreichen. Sofern besonders hohe Belastungen aufzunehmen sind, soll deshalb selbstverständlich jedoch nicht ausgeschlossen sein, dass erfindungsgemässe Lösungen auch zusätzlich die an sich vorbekannten Verstiftungen aufweisen.

Erfindungsgemässe Verbindungen von Linearbewegungsführungen haben den Vorteil, dass sie sehr schnell und einfach zu erzeugen sind. Zudem sind die Verbindungen selbst bei noch nicht erreichter Endfestigkeit aufgrund vollständiger Aushärtung der Füllmasse, unkritisch gegen Belastungen, wie sie üblicherweise bei der Montage einer Maschine auftreten. Anders als beispielsweise Klebeverbindungen, halten erfindungsgemässe Verbindungen einen solchen Montageprozess somit nicht auf.

Als Füllmasse ist grundsätzlich jede fliessfähige Masse geeignet, die nach einem Einfüllvorgang in einer Bohrung mit möglichst geringem Schwund aushärtet und zumindest in geringem Umfang mechanisch belastbar ist, so dass sich die Festigkeit der Schraubenverbindung erhöhen lässt. Giessharze haben sich als besonders geeignet gezeigt. Eine gute mechanische Belastbarkeit lässt sich dadurch erreichen, dass den Giessharzen ein Anteil an Füllstoffen beigegeben wird, beispielsweise Metalle oder mineralische Stoffe. Die Füllstoffe können als Pulver oder in sonstiger Konfektionierung einem Epoxid-Harz beigegeben werden, die eine Verarbeitung zu einem fliessfähigen Giessharz ermöglicht.

In Versuchen haben sich mit den Produkten DWH 310/310 FL, DWH 311/311 FL, DWH 312 und DWH 314 des Unternehmens Dimant® metallplastic GmbH, D-41238 Mönchengladbach (Giesenkirchen) gute Ergebnisse erzielen lassen. Diese Giessharze weisen 70% Füllstoffe oder mehr auf. Gute Ergebnisse lassen sich mit einem Füllstoffanteil von 70% bis 80% erzielen. Die Harzkomponente besteht aus dem eigentlichen Epoxid-Harz und einem Härter, die erst bei der Verarbeitung zur Erzeugung einer Aushärtung zusammengebracht werden. Diese Giessharze sind vom Hersteller vorgesehen, um beschädigte oder abgenutzte Guss- oder Maschinenteile aufzuarbeiten. Zudem ist auch schon eine Verwendung als Gleitbelag vorgesehen.

Die Verbindungsmasse sollte den Schaft der Schraube in der Durchgangsbohrung entlang zumindest eines Abschnittes des Umfangs, vorzugsweise vollständig umgeben. Hierdurch wird in jede radiale Richtung in der Durchgangsbohrung über die Formmasse ein Formschluss zwischen der Schraube und der Schiene erzeugt. Es hat sich gezeigt, dass bereits eine Füllung von 50% - 70% der Bohrungshöhe von in Schienen vorgesehenen Bohrungen sehr gute Resultate liefern. Eine weitere Erhöhungen des Füllstands liefert nur noch geringfügige Festigkeitssteigerungen.

In einer bevorzugten Ausführungsform wird die Füllmasse bei der Erzeugung der Verbindung in das Sackloch eingefüllt. Durch ein Einführen der Schraube in das Sackloch wird dort ein Teil der Füllmasse verdrängt und steigt in den Raum zwischen der Wand der Durchgangsbohrung und der Schraube auf und umgibt diese. Nach der Aushärtung der Füllmasse ist die erfindungsgemässe formschlüssige Verbindung erzeugt.

Damit weniger Druck erforderlich ist, um die Füllmasse von der einen in die andere Ausnehmung steigen zu lassen, kann in der Schraube oder an deren Umfang ein Kanal vorgesehen sein. Die Grösse des Kanals sollte auf die Viskosität der Füllmasse so abgestimmt sein, dass die Füllmasse ohne weiteres durch den Kanal in die andere Ausnehmung gelangt. Durch einen möglichst kleinen Kanal wird die Festigkeit der Schraube nur geringfügig geschwächt.

Um sicher zu vermeiden, dass Füllmasse zwischen die Schiene und den Träger gelangt, kann - insbesondere in Verbindung mit einem in der Schraube verlaufenden Kanal - zwischen der Schraube und dem Gewinde der Sacklochbohrung eine Dichtung vorgesehen sein. Die Dichtung kann zusammen mit der Schraube in die Sacklochbohrung eingeführt werden. Neben jedem beliebigen anderen Dichtungstyp kann beispielsweise eine sogenannte TufLok® -Rundumbeschichtung benutzt werden, bei der es sich um eine unverlierbar auf das Schraubengewinde aufgebrachte elastische Polyamidschicht handelt. Die Füllmasse wird aufgrund einer solchen Dichtung in den Kanal geleitet.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine perspektivische Darstellung einer Linearbewegungsführung;
- Fig. 2: eine geschnittene perspektivische Darstellung einer erfindungsgemässen Befestigung einer Linearbewegungsführung;
- Fig. 3: eine Schnittdarstellung einer erfindungsgemässen Befestigung;
- Fig. 4: eine Situation während der Erzeugung einer erfindungsgemässen Befestigung in einer Schnittdarstellung gemäss Fig. 3;
- Fig. 5: eine weitere erfindungsgemässe Ausführungsform in einer Darstellung gemäss Fig. 3;
- Fig. 6: die erfindungsgemässe Ausführungsform aus Fig. 5 in einer Darstellung gemäss Fig. 4;
- Fig. 7: eine weitere erfindungsgemässe Ausführungsform in einer Darstellung gemäss Fig. 3;
- Fig. 8: die erfindungsgemässe Ausführungsform aus Fig. 7 in einer Darstellung gemäss Fig. 4.

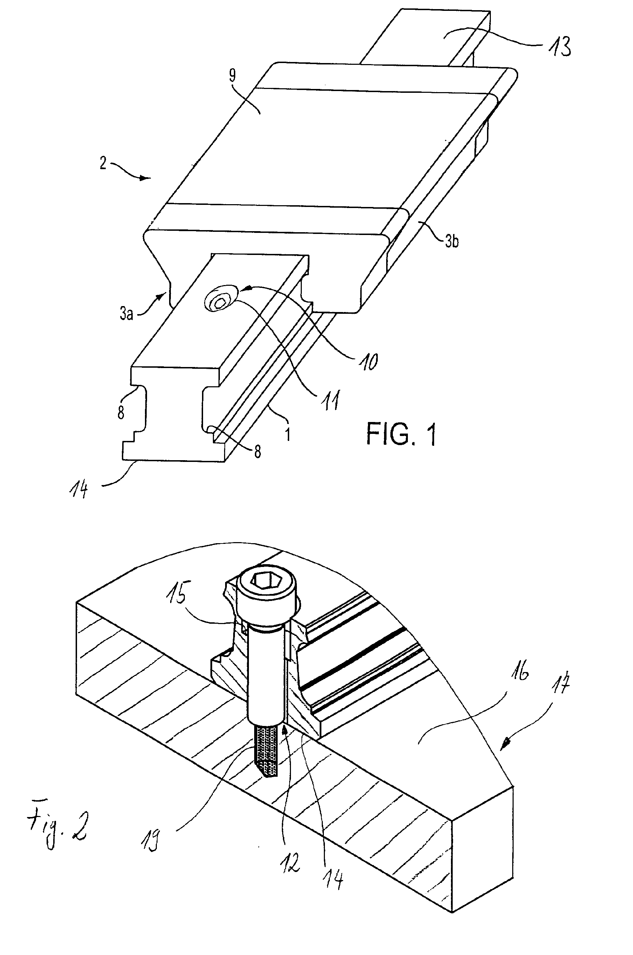

In Fig. 1 ist eine Linearbewegungsführung gezeigt, die eine profilierte Führungsschiene 1 aufweist. Ein Wagen 2 der Linearbewegungsführung ist auf der Schiene 1 längsverschiebbar angeordnet und stützt sich hierbei auf der Schiene 1 ab. Der Wagen 2 ist im Querschnitt im wesentlichen U-förmig ausgebildet und umgreift mit zwei sich an einen Mittelabschnitt anschliessenden Schenkeln 3a, 3b die Schiene 1. Eine Oberseite des Wagens 2 ist als Montagefläche 9 vorgesehen, auf der eine zu bewegende Last befestigt werden kann.

Der Wagen 2 stützt sich über nicht näher gezeigte Wälzkörper, die in vier jeweils in sich geschlossenen und ebenfalls nicht näher dargestellten Endlos-Umläufen innerhalb des Wagens angeordnet sind, auf seitlichen Tragflächen 8 der Führungsschiene 1 ab. Im dargestellten Ausführungsbeispiel sind Kugeln als Wälzkörper vorgesehen. Die Tragflächen 8 sind profiliert, so dass eine Linienberührung zwischen den Kugeln und der Führungsschiene 1 entsteht.

Die Schiene 1 weist mehrere quer zur Längsbewegungsachse verlaufende Durchgangsbohrungen 10 auf, wie eine beispielhaft in Fig. 2 und Fig. 3 gezeigt ist. Diese Durchgangsbohrungen 10 sind als Stufenbohrungen ausgebildet. Die grössere der beiden Öffnungen 11, 12 jeder Durchgangsbohrung 10 befindet sich auf einer Oberseite 13 der Schiene 1, während die kleinere der Öffnungen 11, 12 aus der Unterseite 14 mündet (s. auch Fig. 2). Durch eine Stufe 15 weist die Durchgangsbohrung 10 zwei Abschnitte mit unterschiedlichen, jedoch jeweils konstanten Durchmessern auf.

Die Schiene 1 liegt mit ihrer Unterseite 14 flächig auf einer ebenen Auflagefläche 16 eines Trägers 17 auf. Der Träger 17 kann beispielsweise eine Komponente der (nicht dargestellten) Maschine sein, in die die Linearbewegungsführung einzubauen ist. Der Träger kann aber auch ein Bestandteil der Linearbewegungsführung, z.B. eine Zahnstange, sein. In dem Träger 17 befindet sich jeweils unterhalb jeder Durchgangsbohrung 10 eine mit deren Längsachse 18 fluchtende Sacklochbohrung 19. Wie auch in Fig. 3 und Fig. 4 gezeigt, hat die mit einem Innengewinde 20 versehene Sacklochbohrung 19 einen kleineren Durchmesser als die kleinere Öffnung 12 der Durchgangsbohrung 10.

Zur Befestigung der Schiene 1 am Träger 17 ist von der Oberseite 13 der Schiene 1 aus eine Gewindeschraube 23 durch die Durchgangsbohrung 10 durchgesteckt und in das Gewinde 20 eingeschraubt. Durch entsprechend starken Anzug der Schraube 23 liegt deren Kopf 24 mit einer bestimmten Flächenpressung auf der Stufe 15 auf. Hierdurch wird die Schiene 1 mit ihrer Unterseite 14 auf die Auflagefläche 16 des Trägers 17 gepresst. Die Schraube 23 erzeugt somit zwischen der Schiene 1 und dem Träger 17 eine Flächenpressung, die wiederum eine Haftreibung zur Folge hat.

Die Schraube 23 weist einen Hohlkanal 25 auf, der sich von ihrem dem Schraubenkopf 24 gegenüberliegenden Ende bis etwa - in Bezug auf die Länge des Schraubenschaftes 26 - kurz vor ihrer Mitte und entlang der Schraubenlängsachse 18 erstreckt. Von dort an verläuft der Hohlkanal 25 quer zur Schraubenlängsachse 18 entlang einer Durchmesserlinie des Schraubenschaftes. Hierdurch entstehen an der Schraube zwei Austrittsöffnungen 27, 28. Selbstverständlich ist es auch möglich, dass der Hohlkanal 25 azentrisch oder schräg verläuft, insbesondere in einer Weise, dass keine Querbohrung erforderlich ist.

Bei der in Fig. 3 gezeigten fertiggestellten Verbindung befindet sich sowohl in der Sacklochbohrung 19 als auch in der Durchgangsbohrung 10 eine ausgehärtete Füllmasse 29, möglichst bis unter den Schraubenkopf 24. Da der Schraubenkopf flächig und fest auf der Stufe aufliegt, dichtet er gegen ein Ausdringen der Füllmasse aus der Durchgangsbohrung 10 ab. Es hat sich sogar gezeigt, dass der Schraubenkopf die Durchgangsbohrung luftdicht abschliesst. Die Füllmasse 29 durchdringt auch den Kanal 25 der Schraube vollständig. Zudem wird die Schraube im Bereich ihres dem Schraubenkopf 24 gegenüberliegenden Endes von einer hülsenförmigen verformbaren Dichtung 30 umgeben. Die Dichtung 30 liegt hierbei vollständig in der Sacklochbohrung 19 gegen deren Innengewinde 20 an.

Mit der Dichtung kann sichergestellt werden, dass die Füllmasse nicht in eine Längsnut der Schiene abfliesst. Eine solche Längsnut ist oftmals vorgesehen, um die präzise Bearbeitung der Schienenunterseite zu erleichtern. In vorteilhafterweise wird die Funktion der Dichtung durch den luftdichten Abschluss der Durchgangsbohrung durch den Schraubenkopf unterstützt. Eine massgebliche Menge an Füllmasse könnte nur dann aus der Durchgangsbohrung abfliessen, wenn hierbei ein in der Durchgangsbohrung durch den Abfluss entstehender Unterdruck überwunden werden würde. Durch geeignete Einstellung der Viskosität kann dies jedoch unterbunden werden.

Um die erfindungsgemässe Verbindung zu erzeugen, werden zunächst in an sich vorbekannter Weise und unabhängig voneinander die Bohrungen 10, 19 in die Schiene 1 und den Träger 17 eingebracht. In der Bohrung 19 des Trägers 17 wird zudem das Innengewinde 20 erzeugt. Dann ist die Schiene 1 gegenüber dem Träger 17 auszurichten und die fliessfähige Füllmasse 29 in die Sacklochbohrung einzufüllen. Wie in Fig. 4 gezeigt ist, sollte die Menge an Füllmasse so bemessen sein, dass sich ein Füllstand unterhalb der Auflagefläche 16 ergibt.

Bevor die Füllmasse 29 aushärtet wird die Schraube 23 zusammen mit der Dichtung 30, sofern eine solche verwendet wird, durch die Durchgangsbohrung der Schiene 1 durch- und in die Sacklochbohrung 19 eingeführt. Diese Situation ist in Fig. 4 dargestellt. Spätestens nachdem die Schraube 23 in das Innengewinde 20 eingedreht wird, drückt diese auf die Füllmasse 29. Hierdurch steigt die Füllmasse 29 durch eine endseitige Eintrittsöffnung 31 des Kanals 25 in die Schraube ein und tritt durch die beiden Austrittsöffnungen 27, 28 aus. Die Füllmasse 29 gelangt hierdurch in den Füllbereich der Durchgangsbohrung 10, der sich zwischen dem Schraubenschaft 26 und der Wand 10a der Durchgangsbohrung ausbildet. Durch eine geeignete Wahl der Menge der Füllmasse 29 füllt diese den Füllbereich der Durchgangsbohrung 10 zumindest weitestgehend bis unterhalb des Schraubenkopfes 24 aus, wie dies in Fig. 3 gezeigt ist. Nachfolgend härtet die Füllmasse 29 aufgrund einer chemischen Reaktion aus, die je nach verwendeter Masse unterschiedlich sein kann.

Im hier gezeigten Ausführungsbeispiel wird ein Epoxid-Harz mit einem Anteil von 75% Füllstoffe verwendet. Das Epoxid-Harz selbst weist zwei Komponenten auf, nämlich ein Harz und einen Härter, die bei Zusammenführung zu einer Polymerisation führen und die Füllstoffe fest umschliessen. Als besonders geeignet hat sich hierbei die vom bereits eingangs genannten Unternehmen Diamant® metallplastic GmbH, _unter der Bezeichnung DWH 310 FL angebotene Füllmasse gezeigt, der einer der vom gleichen Unternehmen angebotenen Verdicker zugegeben werden kann.

Die Füllmasse liegt dann sowohl an der Schraube 23 als auch an der Wand 10a flächig an. Da eine Schiene 1 mit mehreren Schrauben 23 am Träger 17 befestigt wird, sollte jede der Schraubenverbindungen mit einer solchen formschlüssigen Verbindung versehen sein. In Abhängigkeit von den zu erwartenden Belastungen kann alternativ auch nur jede zweite oder jede dritte Schraubenverbindung erfindungsgemäss gestaltet sein.

Mit erfindungsgemässen Schraubenverbindungen kann erreicht werden, dass bei einer Beanspruchung der Verbindung mit einer Kraft, die quer zur Schraubenlängsachse 18 verläuft, aufgrund einer Druckbelastbarkeit der Füllmasse Verformungen besser vermieden und die maximale Belastbarkeit der Verbindung gesteigert werden kann.

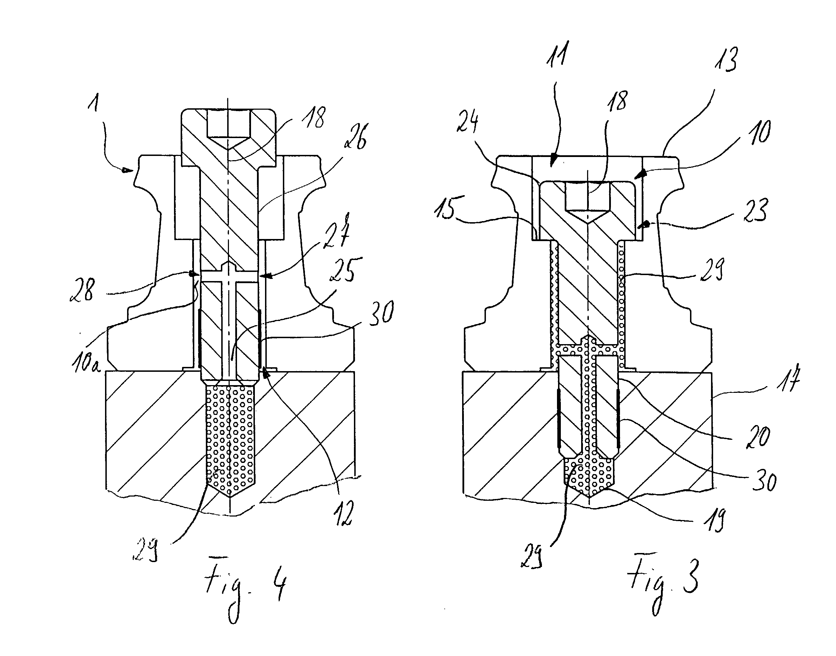

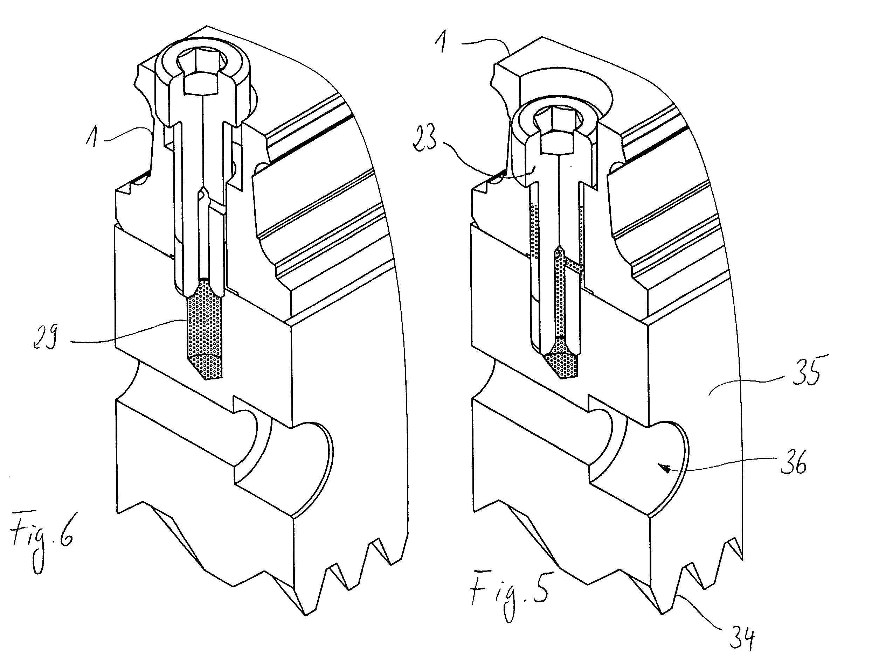

In Fig. 5 und Fig. 6 ist gezeigt, dass die erfindungsgemässe Verbindung auch dann Verwendung finden kann, wenn als Träger eine Zahnstange 35 mit einer Verzahnung 34 vorgesehen ist. Bei einer solchen Linearbewegungsführung wird die Zahnstange 35 an einer Komponente der jeweiligen Maschine mit mehreren nicht näher dargestellten Schraubenverbindung befestigt. Die in Fig. 5 und Fig. 6 gezeigte Zahnstange weist hierzu Durchgangsbohrungen 36 auf, die quer zur Längsbewegungsachse und zu den Durchgangsbohrungen der Schiene 1 verlaufen. Auch diese Schraubenverbindungen können erfindungsgemäss mit einer Füllmasse und einer zum Durchtritt der Füllmasse durch die Schraube entsprechend präparierten Schraube versehen sein. Zusätzlich sind auch die zur Befestigung der Schiene 1 an der Zahnstange 35 vorgesehenen Schrauben 23 von der Füllmasse 29 umgeben, wie dies bereits im Zusammenhang mit dem zuvor erörterten Ausführungsbeispiel beschrieben ist.

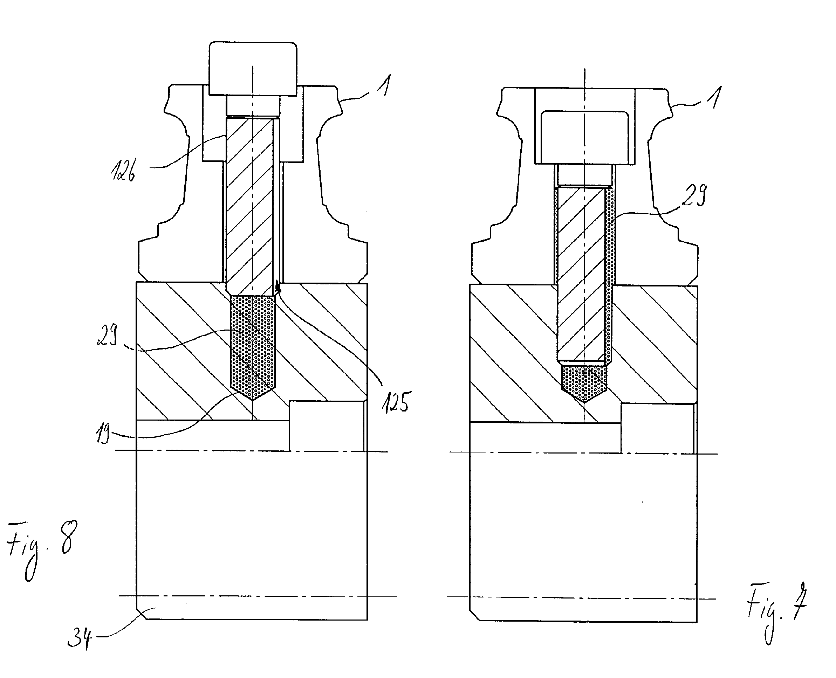

In Fig. 7 und Fig. 8 ist ein weiteres erfindungsgemässes Ausführungsbeispiel gezeigt. Im Unterschied zu den zuvor erörterten Ausführungsbeispielen ist hier der Kanal 125 als am Umfang des Schraubenschaftes 126 eingebrachte Nut ausgebildet, die parallel zur Längsachse der Schraube verläuft. Die Nut kann über einen Teil oder im wesentlichen die gesamte Länge des Schraubenschaftes 126 verlaufen. Es sollte lediglich sichergestellt sein, dass die Füllmasse 29 durch den Kanal 125 - oder das Gewinde, sofern kein Kanal vorhanden ist - in die Durchgangsbohrung 10 der Schiene 1 gelangt. Bei dieser Ausführungsform kann auf eine Dichtung zwischen der Schraube 123 und dem Innengewinde der Sacklochbohrung 19 verzichtet werden.

### Bezugszeichenliste

- 1: Führungsschiene
- 2: Wagen
- 3a: Schenkel
- 3b: Schenkel
- 4: Montagefläche
- 8: Tragflächen
- 9: Montagefläche
- 10: Durchgangsbohrung
- 10a: Wand
- 11: Öffnung
- 12: Öffnung
- 13: Oberseite
- 14: Unterseite
- 15: Stufe
- 16: Auflagefläche
- 17: Träger
- 18: Längsachse
- 19: Sacklochbohrung
- 20: Innengewinde
- 23: Gewindeschraube
- 24: Schraubenkopf
- 25: Hohlkanal
- 26: Schraubenschaft
- 27: Austrittsöffnung
- 28: Austrittsöffnung
- 29: Füllmasse
- 30: Dichtung
- 31: Eintrittsöffnung
- 34: Verzahnung
- 35: Zahnstange
- 36: Durchgangsbohrung
- 123: Schraube
- 125: Kanal
- 126: Schraubenschaft

## Patentansprüche

1. Linearbewegungsführungs-Verbindung zwischen einem Führungskörper der Linearbewegungsführung und einem Träger, an dem der Führungskörper befestigt ist, die ein Verbindungselement aufweist, das sich sowohl in einer Ausnehmung des Führungskörpers als auch in einer Ausnehmung des Trägers befindet und mit Abstand zu einer Wand von einer der beiden Ausnehmungen angeordnet ist, **dadurch gekennzeichnet, dass** sich zwischen dem Verbindungselement und mindestens jener Ausnehmung, zu deren Wand (10a) das Verbindungselement (23) mit Abstand angeordnet ist, eine ausgehärtete Füllmasse (29) befindet, die sowohl Kontakt zum Verbindungselement (23) als auch zur Wand (10a) hat.

2. Linearbewegungsführungs-Verbindung nach Anspruch 1, **dadurch gekennzeichnet, dass** die Füllmasse (29) das Verbindungselement zumindest entlang eines Abschnittes einer Mantelfläche des Verbindungselementes in dessen Umfangsrichtung vollständig umgibt.

3. Linearbewegungsführungs-Verbindung nach Anspruch 1 oder 2, **dadurch gekennzeichnet, dass** sich die Füllmasse (29) in beiden Ausnehmungen (10, 19) befindet.

4. Linearbewegungsführungs-Verbindung nach einem oder mehreren der vorhergehenden Ansprüche 1 bis 3, **dadurch gekennzeichnet, dass** das Verbindungselement mit einem zum Durchfluss von Füllmasse vorgesehenen Kanal versehen ist.

5. Linearbewegungsführungs-Verbindung nach Anspruch 4, **dadurch gekennzeichnet, dass** das Verbindungselement mit einem Hohlkanal ausgebildet ist, der mit einer Eintritts- und einer Austrittsöffnung für die Füllmasse versehen ist.

6. Linearbewegungsführungs-Verbindung nach Anspruch 4, **dadurch gekennzeichnet, dass** der Kanal als eine am Umfang des Verbindungselementes vorgesehene Längsnut ausgebildet ist.

7. Linearbewegungsführungs-Verbindung nach einem oder mehreren der vorhergehenden Ansprüche, **gekennzeichnet durch** eine Dichtung, die das Verbindungselement umgibt.

8. Linearbewegungsführungs-Verbindung nach einem oder mehreren der vorhergehenden Ansprüche, **dadurch gekennzeichnet, dass** das Verbindungselement als Schraube ausgebildet ist.

9. Linearbewegungsführungs-Verbindung nach Anspruch 8, **dadurch gekennzeichnet, dass** sich Füllmasse auch im Gewindegang der Schraube im Bereich ihres freien Endes befindet.

10. Linearbewegungsführung zur Lagerung und Längsführung von Maschinenteilen, bei der ein zur Befestigung an einem Maschinenteil vorgesehener erster Führungskörper der Linearbewegungsführung über mehrere Wälzkörper gegenüber einem zweiten Führungskörper entlang einer Längsbewegungsachse geführt ist, wobei die Befestigung ein in eine Ausnehmung des Führungskörpers eingeführtes Befestigungsmittel aufweist, das mit Abstand zur Wand der Ausnehmung angeordnet ist, **gekennzeichnet durch** eine Linearbewegungsführungs-Verbindung nach einem der vorhergehenden Ansprüche 1 bis 9.

11. Linearbewegungsführung nach Anspruch 10, **dadurch gekennzeichnet, dass** der Träger eine Zahnstange ist.

12. Verfahren zur Erzeugung einer Verbindung zwischen einem Führungskörper einer wälzkörperbasierten Linearbewegungsführung und einem Träger für den Führungskörper, wobei sowohl der Führungskörper als auch der Träger mit jeweils zumindest einer Ausnehmung versehen ist, in die ein gemeinsames Verbindungselement eingeführt wird, **dadurch gekennzeichnet, dass** in zumindest eine der Ausnehmungen zwischen dem Verbindungselement und der Wand der Ausnehmung eine fliessfähige und aushärtbare Füllmasse eingeführt wird.

13. Verfahren nach Anspruch 12, **dadurch gekennzeichnet, dass** die Füllmasse in die Ausnehmung des Trägers eingeführt wird,
ferner ein als Schraube ausgebildetes Verbindungselement benutzt wird, das im Schraubenschaft einen Kanal hat, wobei zuerst die Füllmasse und danach die Schraube eingeführt wird, wodurch Füllmasse in der einen Ausnehmung verdrängt wird, und dadurch in die andere Ausnehmung gelangt und anschliessend dort aushärtet.

14. Verfahren nach Anspruch 12, **dadurch gekennzeichnet, dass** Füllstoff durch einen Hohlkanal des Verbindungselementes in die andere Ausnehmung gelangt.

15. Verfahren nach den Ansprüchen 13 oder 14, **dadurch gekennzeichnet, dass** zur Vermeidung eines Abflusses von Füllmasse zwischen dem Verbindungselement und einer Wand einer Ausnehmung eine Dichtung (30) eingesetzt wird, um Füllmasse in den Hohlkanal zu zwingen.
